# EUROPÄISCHE PATENTSCHRIFT

(11) **EP 0 374 226 B1**
(45) Veröffentlichungstag und Bekanntmachung des Hinweises auf die Patenterteilung: **21.04.1993**
(21) Anmeldenummer: 89906016.4
(22) Anmeldetag: 05.06.1989
(51) Int. Cl.: B23C 5/02

(54) **FRÄSER MIT STIRN- UND WALZENSCHNEIDEN**
MILLING CUTTER WITH FACE MILLING AND HOBBING
FRAISE A DEPOUILLE DE FACE OU EN DEVELOPPANTE

(30) Priorität: 03.06.1988 CH 2128/88
(43) Veröffentlichungstag der Anmeldung: 27.06.1990
(73) Patentinhaber: ASEA BROWN BOVERI AG, 5400 Baden (CH)
(72) Erfinder: WIEDERKEHR, Kurt, CH-5608 Stetten (CH)
(86) Internationale Anmeldenummer: CH8900108
(87) Internationale Veröffentlichungsnummer: WO8911936

(56) Entgegenhaltungen:
- US-A- 1 468 857
- US-A- 2 344 954
- US-A- 2 344 956
- US-A- 2 381 540

## Beschreibung

Bei der Erfindung wird ausgegangen von einem Fräser mit Stirn- und Walzenschneiden nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus der US-A-2,344,954 bekannt ist. Dort ist ein Fräser mit radial verlaufenden Fräskanten an den beiden Stirnseiten sowie mit Walzenschneiden am Aussenumfang angegeben, die bogenförmig ausgebildet sind. Alle Bögen der Walzenschneiden sind in Drehrichtung des Fräsers konvex geformt. Die Walzenschneiden sind jeweils mit einer Fräskante an einer 1. Stirnseite des Fräsers verbunden.

Damit können Nuten allseitig ausgefräst werden, wobei der Fräser nur in einer Drehrichtung betreibbar ist und nicht gewendet werden kann.

Fräser werden in Ein- oder Mehrstoffausführung hergestellt: kleinere Fräser allgemein in massiver Ausführung, grössere Fräser vornehmlich mit fest eingetöteten Schneiden bzw. - falls konstruktiv möglich - mit auswechselbaren Messern oder neuerdings in wachsendem Umfang mit Wendeschneidplatten. Als Schneidstoff verwendet man meist Hartmetall (HM) oder Schnellarbeitsstähle (HSS), zuweilen Werkzeugstähle (WS), Oxidkeramik (OK) oder gesinterte Werkstoffe. Für bestimmte grosse Oberflächenfräs-Bearbeitungen haben sich die sogenannten Walzenstirnfräser gut bewährt. Im allgemeinen werden diese Fräser in HSS-Ausführung hergestellt, vorzugsweise sind sie in Längsrichtung schraubengewunden, weil diese Ausbildung gegenüber denjenigen mit achsparallel angeordneten Schneidzähnen ruhiger arbeiten. Mit den Watzenstirnfräsern lassen sich die zu bearbeitenden Werkstoffoberflächen stirneckförmig angehen, was die Fräsleistung wesentlich erhöht.

Es ist offensichtlich, dass sich die Abnützung des Fräsers sowohl stirn- als auch walzenseitig einstellt; ein Nachschleifen ist an sich möglich, nur erfordert diese Operation regelmässig einen grossen Aufwand, denn der Fräser muss stirnseitig jeweils um die im Einsatz gestandene watzseitige Tiefe abgeschliffen werden. Darüber hinaus muss anschliessend noch das stirnseitige Hinterschleifen der einzelnen Zähne vorgenommen werden, was regelmässig eine aufwendige und sehr akkurat auszuführende Bearbeitung darstellt. Diese Watzenstirnfräser sind auch nur einseitig zu gebrauchen, denn das andere Kopfende ist als Aufnahme- und Befestigungspartie, beispielsweise mit einer Querkeilnute, ausgebildet.

Um diese Nachteile aufzufangen, ist eine neue Generation von Fräsern entwickelt worden, die sogenannten Wendeplatten-Fräsköpfe. Für Fräsarbeiten mit einem Anstellwinkel um die 90° haben sich diese Eckmesserköpfe mit Wendeschneidplatten durchgesetzt. Durch den Einsatz von Wendeschneidplatten entfällt bei diesen Fräsern das Nachschärfen der Messer auf Werkzeugschleifmaschinen. Eine ideale Auswechselbarkeit ist demnach dort gegeben, wo die Wendeplatten nicht gelötet, sondern durch eine lösbare Verbindung mit dem Werkzeuggrundkörper verbunden sind. Selbstverständlich muss der Fräser im zusammengebauten Zustand die Forderung einer maximalen Plan- und Rundlaufgenauigkeit erfüllen. Dies verlangt höchste Präzision aller Einzelbauteile wie Werkzeuggrundkörper, Spann- und Schneidelemente. Indessen, selbst nach Erfüllung dieser Vorgaben eignen sich solche Eckmesserköpfe mit Wendeschneidplatten als Fräser nur ab einer gewissen Grösse des Werkzeuggrundkörpers: Die Schneidelemente, d.h. die Wendeplatten, deren Befestigung sowie der zugehörige Spanraum benötigen sehr viel Umfangsplatz, so dass bei kleinen Eckmesserköpfen nur wenige Schneidelemente auf dem Umfang gebildet werden können. Das ist insofern sehr nachteilig, als die Vorschubgrösse, also die Fräsleistung von der Anzahl der Schneiden abhängig ist. Muss aus diesem Grund mit einem kleinen Vorschub operiert werden, so bleibt die Fräsleistung mit einem solchen Werkzeug an sich klein und daher unwirtschaftlich. Aber auch bei grossen Werkzeuggrundkörpern, bei welchen an sich genügend Schneiden vorgesehen werden könnten, ergeben sich in der Praxis beim Wenden der Schneidelemente, trotz Präzision aller Einzelbauteile, immer wieder Unzulänglichkeiten, die sich auf die Qualität des Fräsers niederschlagen.

### AUFGABE DER ERFINDUNG

Hier will die Erfindung Abhilfe schaffen. Der Erfindung, wie sie im Anspruch 1 definiert ist, löst die Aufgabe, einen Fräser der eingangs genannten Art so auszubilden, dass er als massiver Wendeschneidfräser eingesetzt werden kann.

Die wesentlichen Vorteile der Erfindung sind darin zu sehen, dass ein solcher Wendeschneidfräser beidseitig die selbe Fräsleistung zu erbringen vermag. Das bedeutet, dass der Wendeschneidfräser, sobald die eine Seite stumpf ist, umgedreht werden kann. Sowohl die Umdrehung als auch die Auswechslung des alten durch einen neuen Wendeschneidring sind unmittelbare Handlungen, welche zu keinen Zeitverlusten führen. Dies macht sich insbesondere dort positiv bemerkbar, wo teuere NC-Maschinen im Einsatz stehen. Aber nicht nur der rasche Einsatz der Fräser ist hier gewährleistet, sondern die unabdingbar vorausgesetzte hohe Plan- und Rundlaufgenauigkeit geht, insbesondere bei der Wendeoperation des Fräsers, nicht verloren. Dies ist vorliegend immer gegeben, denn die beiden Anschlagflächen des Wendeschneidfräsers sind planparallel zueinander bearbeitet worden. Die Rundlaufgenauigkeit wird an den beidseitig vorgesehenen Zentrierkonen erstellt. Eine über die Breite des Wendeschneidfräsers durchgehende Mitnehmerbohrung sorgt dann dafür, dass die Fräskraft mechanisch übertragen werden kann. Da ein Nachschärfen des Wendeschneidfräser nicht vorgesehen ist, besteht ein weiterer Vorteil darin, dass mit der vollen zur Verfügung stehenden Spantiefe gefahren werden kann: Die jeweils mögliche Spantiefe ist abhängig von der Breite des Wendeschneidfräsers und beträgt, entgegengesetzt, je die halbe Breite desselben. Ein weiterer Vorteil ergibt sich aus der massiven Ausführung des Wendeschneidfräsers: Dank der grossen Zähnezahl wird eine hohe Schneidleistung erzielt; danebst lassen sich die Spanräume optimal gestatten, so dass auch von dieser Seite her betrachtet der angestrebten hohen Schneidleistung nichts mehr im Wege steht.

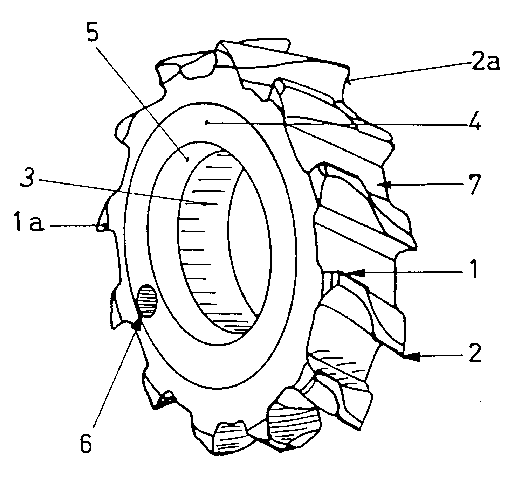

Im folgenden wird anhand der Zeichnung ein Ausführungsbeispiel der Erfindung erläutert. Alle für das unmittelbare Verständnis der Erfindung nicht erforderlichen Elemente sind fortgelassen.

### KURZE BESCHREIBUNG DER FIGUR

Die einzige Figur zeigt einen Wendeschneidfräser in perspektivischer Darstellung.

### BESCHREIBUNG DES AUSFÜHRUNGSBEISPIELS

Die Figur zeigt einen Wendeschneidfräser, der hier aufgrund seiner schmalen Dimensionierung als Wendeschneidring bezeichnet werden kann. Selbstverständlich ist die Breite des Fräsers variierbar; diese richtet sich, wie unten noch zur Erläuterung kommen wird, nach der angestrebten Spantiefe. Die Walzenschneiden 1, 2 sind entgegengesetzt gerichtet und erstrecken sich jeweils bis zur Breitenmitte des Wendeschneidringes. Ebenfalls entgegengesetzt zueinander stehen die Stirnschneiden 1a, 2a, wobei diese mit dem Schneidwinkel der zugehörigen Watzenschneide übereinstimmen. Somit ist ersichtlich, dass der Fräser, der vorzugsweise für Arbeiten mit 90° Anstellwinkel vorgesehen ist, wendbar ist. Nebst der frästechnischen Voraussetzung darf bei jeder Wendeoperation die Plan- und Rundlaufgenauigkeit des Fräsers keine Verschlechterung erfahren, will man eine Einbusse der Schneidleistung vermeiden. Zu diesem Zweck weist jede Stirnseite des Wendeschneidringes im Bereich der Bohrung 3 eine auf Planparallelität genauesten bearbeitete Auflagefläche 4 auf. Danebst muss auch gleichzeitig die Rundlaufgenauigkeit sichergestellt werden; dies geschieht, indem - auch wiederum beidseitig - die Bohrung 3 stirnseitig in einen Zentrierkonus 5 übergeht, der zentrisch zum Gegenstück im Aufnahmedorn der Fräsmaschine verläuft. Mit diesen zwei Vorkehrungen ist somit gewährleistet, dass die ursprünglichen Plan- und Rundlaufeigenschaften des Fräsers sowohl beim ersten Spannen als auch bei jeder folgenden Wendeoperation erhatten bleibt. Grundsätzlich ist es möglich,-den Zentrierkonus auch als Spannkonus zu verwenden. Für die Güte der Planparallelität wird es indessen stets von Vorteil sein, wenn die Auflagenflächen 4 die Referenzflächen des Fräsers bilden, denn dieser wird darüber hinaus zur Uebertragung der Fräskraft nicht ausschliesslich kraftschlüssig im Aufnahmedorn gespannt, sondern im Fräser wird eine formschlüssige Aufnahme in Form einer Mitnehmerbohrung 6 vorgesehen. Da die zulässige und mögliche Vorschubgrösse von der Anzahl der Schneiden des Fräsers abhängig ist, wird stets angestrebt, eine möglichst grosse Zähnezahl vorzusehen. Die damit erzielbare grosse spanabhebende Fräsleistung darf aber nicht durch einen zu klein geratenen Spanraum 7 eingeschränkt werden. Optimale Fräser bilden daher einen Kompromiss aus diesen beiden Bedingungen. Selbstverständlich muss auch die Breite der im Einsatz stehenden Schneide, insbesondere bei Fräsarbeiten mit einem Anstellwinkel mit 90°, mitberücksichtigt werden. Da es sich beim hier gezeigten Wendeschneidring vorzugsweise um ein NC-gerechtes Werkzeug handelt, womit zugleich gesagt ist, dass ein Nachschärfen der Schneiden aus logistischen und wirtschaftlichen Ueberlegungen ausser Betracht fällt, ist es wichtig, dass die ganze in Fräsrichtung zur Verfügung stehende Breite der Schneide, die aus der Charakteristik dieses Fräsers jeweils die halbe Breite des ganzen Wendeschneidringes ausmacht, im Einsatz stehen muss. Von daher wird die Gesamtbreite des Wendeschneidringes in Abhängigkeit zur optimalen Fräsleistung einer Seite des Fräsers stehen.

## Patentansprüche

1. Fräser in ringförmiger, massiver Ausführung
a) mit mehreren Paaren von Stirnschneiden (1a) an beiden seiner Stirnseiten und
b) mit Paaren von Walzenschneiden (1, 2) an seinem Aussenumfang,
c) wobei jede Walzenschneide (1, 2) eines Walzenschneidenpaares (1, 2) mit einer Stirnschneide (1a, 1b) eines Stirnschneidenpaares in Verbindung steht,
dadurch gekennzeichnet,
d) dass die Stirnschneiden (1a) auf einer 1. Stirnseite in peripherer Richtung entgegengesetzt orientiert sind wie die Stirnschneiden auf der gegenüberliegenden Stirnseite des Fräsers,
e) dass die Walzenschneiden (1) an einer 1. Hälfte des Fräsers entgegengesetzt orientiert sind wie die Walzenschneiden (2) desselben Walzenschneidenpaares auf der anderen Hälfte des Fräsers und
f) dass die Schneidenwinkel der Stirnschneiden (1a) mit denen der zur gleichen Hälfte des Fräsers gehörenden Walzenschneiden (1, 2) übereinstimmen,
g) wobei sich jede Walzenschneide (1, 2) eines Walzenschneidenpaares (1, 2) über die halbe Breite des Fräsers erstreckt.

2. Fräser nach Anspruch 1, dadurch gekennzeichnet, dass die Walzenschneiden (1, 2) an Stegen angeordnet sind, welche aus einem Zylinderkörper des Fräsers nach aussen vorragen und bezüglich der Drehachse des Fräsers schräg verlaufen.

3. Fräser nach Anspruch 2, dadurch gekennzeichnet, dass die Stirnschneiden (1a) nur an diesen Stegen angeordnet sind.

4. Fräser nach einem der Ansprüche 1 bis 3, dadurch gekennzeichnet, dass die Walzenschneiden (1, 2) geradlinig ausgebildet sind.

5. Fräser nach einem der Ansprüche 1 bis 4, dadurch gekennzeichnet, dass seine Formgebung wendesymmetrisch ist.

6. Fräser nach einem der Ansprüche 1 bis 5, dadurch gekennzeichnet, dass stirnseitig mindestens eine Mitnehmerbohrung (6) vorgesehen ist.

## Claims

1. Milling cutter of solid annular construction
a) having a plurality of pairs of face cutting edges (1a) on both of its face sides and
b) having pairs of peripheral cutting edges (1, 2) on its outer circumference,
c) each peripheral cutting edge (1, 2) of a pair of peripheral cutting edges (1, 2) being in connection with a face cutting edge (1a, 1b) of a pair of face cutting edges,
characterised
d) in that the face cutting edges (1a) on a 1st face side are orientated oppositely in the peripheral direction to the face cutting edges on the opposite face side of the milling cutter,
e) in that the peripheral cutting edges (1) on a 1st half of the milling cutter are orientated oppositely to the peripheral cutting edges (2) of the same pair of peripheral cutting edges on the other half of the milling cutter and
f) in that the edge angles of the face cutting edges (1a) coincide with those of the peripheral cutting edges (1, 2) belonging to the same half of the milling cutter,
g) each peripheral cutting edge (1, 2) of a pair of peripheral cutting edges (1, 2) extending over half the width of the milling cutter.

2. Milling cutter according to Claim 1, characterised in that the peripheral cutting edges (1, 2) are arranged on webs which protrude outwards from a cylindrical body of the milling cutter and run obliquely with respect to the axis of rotation of the milling cutter.

3. Milling cutter according to Claim 2, characterised in that the face cutting edges (1a) are arranged only on these webs.

4. Milling cutter according to one of Claims 1 to 3, characterised in that the peripheral cutting edges (1, 2) are rectilinearly designed.

5. Milling cutter according to one of Claims 1 to 4, characterised in that its shaping is reversibly symmetrical.

6. Milling cutter according to one of Claims 1 to 5, characterised in that at least one driving bore (6) is provided at the face.

## Revendications

1. Fraise de type annulaire massif,
a) avec plusieurs paires de tranchants de bout (1a) à ses deux faces de bout et
b) avec des paires de tranchants cylindriques (1, 2) à son pourtour extérieur,
c) dans laquelle chaque tranchant cylindrique (1, 2) d'une paire de tranchants cylindriques (1, 2) est raccordé à un tranchant de bout (1a, 1b) d'une paire de tranchants de bout,
caractérisée en ce que
d) les tranchants de bout (1a) situés dans une première face de bout sont orientés en direction périphérique en sens opposé par rapport aux tranchants de bout situés dans la face de bout opposée de la fraise, en ce que
e) les tranchants cylindriques (1) situés dans une première moitié de la fraise sont orientés en direction opposée par rapport aux tranchants cylindriques (2) de la même paire de tranchants cylindriques situés dans l'autre moitié de la fraise, en ce que
f) les angles de coupe des tranchants de bout (1a) correspondent à ceux des tranchants cylindriques (1, 2) appartenant à la même moitié de la fraise,
g) chaque tranchant cylindrique (1, 2) d'une paire de tranchants cylindriques (1, 2) s'étendant sur la moitié de la largeur de la fraise.

2. Fraise suivant la revendication 1, caractérisée en ce que les tranchants cylindriques (1, 2) sont placés sur des lames qui sortent vers l'extérieur d'un corps cylindrique de la fraise et qui sont disposées en oblique par rapport à l'axe de rotation de la fraise.

3. Fraise suivant la revendication 2, caractérisée en ce que les tranchants de bout (1a) ne sont placés que sur ces lames.

4. Fraise suivant l'une quelconque des revendications 1 à 3, caractérisée en ce que les tranchants cylindriques (1, 2) sont rectilignes.

5. Fraise suivant l'une quelconque des revendications 1 à 4, caractérisée en ce que sa forme a une symétrie de retournement.

6. Fraise suivant l'une ou l'autre des revendications 1 à 5, caractérisée en ce qu'il est prévu dans la face de bout au moins un trou d'entraînement (6).
